# EUROPEAN PATENT APPLICATION

(11) **EP 1 535 854 A1**
(43) Date of publication of application: **01.06.2005**
(21) Application number: 04019259.3
(22) Date of filing: 13.08.2004
(51) Int. Cl.: B65D 47/08, G01F 11/26

(54) **Cap for containers with cover lid rotating on a transverse horizontal axis snap activated by pushing with a finger or thumb**

(30) Priority: 26.09.2003 IT GE20030077
(71) Applicant: Invat S.r.l., 16013 Campoligure (Genova) (IT)
(72) Inventor: Rossi, Luca, 16013 Campoligure (GE) (IT)
(74) Representative: Faraggiana, Vittorio, Dr. Ing.

(57) **Abstract**

Cap for containers with cover lid rotating on a transverse horizontal axis snap activated by pushing with a finger or thumb, allowing pouring in a single movement or in subsequent non dosed quantities, where such cap is made up of two elements and in detail of a first element of the cap with body (1) to be mounted on the mouth of the container (3), fitted with a cover lid (5), supported by lateral pins (7) located on a transverse horizontal axis, acting as hinges for the rotation, fitted with an L-shaped section (10) connected to the lid along a first weakened line (9) and connected to a stretch of the upper edge of the body (1) of the cap along a second weakened line (11), in such way that pushing said L-shaped section (10) toward the inside of the cap one obtains stable opening of the cap, the closing of which is obtained by means of a manual thrust; the cap has also a second element made up of a pouring spout (12) placed off centre so as to correspond with the holding edge (6) of the cap (5) of the body (1) of the first element of the cap and connected to a skirt (13) that is almost a truncated cone, fitted with a C-shaped lower sealing edge (14) on the mouth of the container (3), where the bottom (15) and the internal side (16) of the pouring spout (12) are open to allow the flow of liquid leaving the container (3), and where the second element (12) of the cap is mounted inside the first element.

## Description

Various types of caps for containers are commonly known and in particular caps mounted under pressure or by screwing on the upper mouth of the containers, generally of the bottle type.

These known caps are made up in various ways according to their use and the product they contain to be poured all at once or in subsequent doses.

This invention deals with a cap for containers, useful for pouring of the content all at once or in subsequent doses and also for the pouring of opportunely dosed quantities.

This cap is made up of two elements, of which the first element envisages an almost cylindrical body to be mounted by pressure or by screwing on the mouth of the container. On the upper part of this cylindrical body there is a coverlid, with a holding edge on the pouring spout, where this lid is hinged on pins connecting the lid to the cylindrical body. These pins are located on a horizontal axis transverse to the lid; they are created by moulding together with the first element of the cap and support the movements of the lid by torsion.

On the opposite side of the holding edge, linked by a first weakened line, there is an L-shaped section on the lid, which in turn is linked to the opposite side, always by means of a second weakened line to a stretch of the upper edge of the body of the cap.

Pushing from the outside with a finger or thumb on this L-shaped section, it moves along both the weakened lines and causes the lid, which revolves on the connecting pins of the cap's body, to turn into the open position. The open lid assumes a stable position.

The second element of the cap envisages a pouring spout located off centre on one side of a skirt that is almost a truncated cone fitted with a C-shaped profile on the lower edge aimed at receiving and sealing the upper mouth of the container. The bottom and the inside of this spout are open to allow the flow of the liquid leaving the container.

The second element of the cap is mounted inside the first element and is fixed by means of a peripheral ridge inside the body of the first element, while the C-shaped profile covers the external edge of the container, on which the cap is mounted by pressure or by means of threading.

When the cap is mounted by means of threading, the external element and that is the body of the cap is fitted with a guarantee strip joined by breakable peduncles.

The cap described is of the total pouring type or of indefinite partial pouring. A cap having the same construction may be envisaged fitted with a measuring device for the liquid to be poured.

This measuring device cap has, as mentioned in the first solution, the pouring spout off centre compared to the skirt, which in turn is fitted with a profile on its lower periphery aimed however at receiving and sealing the upper opening of the container. According to the measuring device solution, this second element has the pouring spout fitted a closed bottom, while there is a lateral opening aimed at allowing the passage of the liquid from the container to the pouring spout which acts as a receptacle for the dosed liquid.

Furthermore, according to this second solution of the measuring device cap, the skirt with the truncated cone shape is fitted with deformable folds and is attached to one side of the pouring spout presenting a movable wing for opening and closing of the lateral opening of the pouring spout.

Then, according to this solution, a thrust wall is envisaged placed perpendicular to the inside of the lid, between the pins connecting the lid to the body of the cap and the first weakened central line of the L-shaped section.

Opening the lid this wall moves toward the wing of the pouring spout and pushes this wing into a closing position against the lateral opening of the pouring spout. Closing the lid the wing for closure of the opening of the pouring spout opens once again.

It follows that, after shaking the closed container, the liquid fills the pouring spout and thus with opening of the lid the communication between the pouring spout and the inside of the container is closed, so with pouring one obtains a pre-established quota of the contents.

The invention in words is clarified in its practical and exemplary realization in the attached drawings, where:
Fig. 1 shows the cross-section of the first element of the cap along the central vertical plane of the closed lid,
Fig. 2 shows the side view from the right of the first element of the cap in Fig. 1,
Fig. 3 shows the view from above of the first element of the cap in Fig. 1,
Fig. 4 shows the cross-section of the first element of the cap in Fig. 1 with the lid open,
Fig. 5 shows the cross-section of the second element of the cap along the central vertical plane corresponding to the cross-section of the first element of Fig.1,
Fig. 6 shows the view from above of the second element of Fig. 5,
Fig. 7 shows the central cross-section of the group of the first and second element of Figs. 1 and 5,
Fig. 8 shows the group of Fig. 7 with the lid open,
Fig. 9 shows the mounting of the cap of Fig. 7 on the edge of the mouth of an example container,
Fig. 10 shows a variant of the cap in Fig. 7 for mounting by means of threading on the mouth of the container,
Fig. 11 shows the second element of the cap in the measuring device solution,
Fig. 13 shows the partial view from above and horizontal cross-section A-A, B-B respectively to Fig. 12,
Fig. 14 shows the group of the cap in Fig. 12 with the lid open.

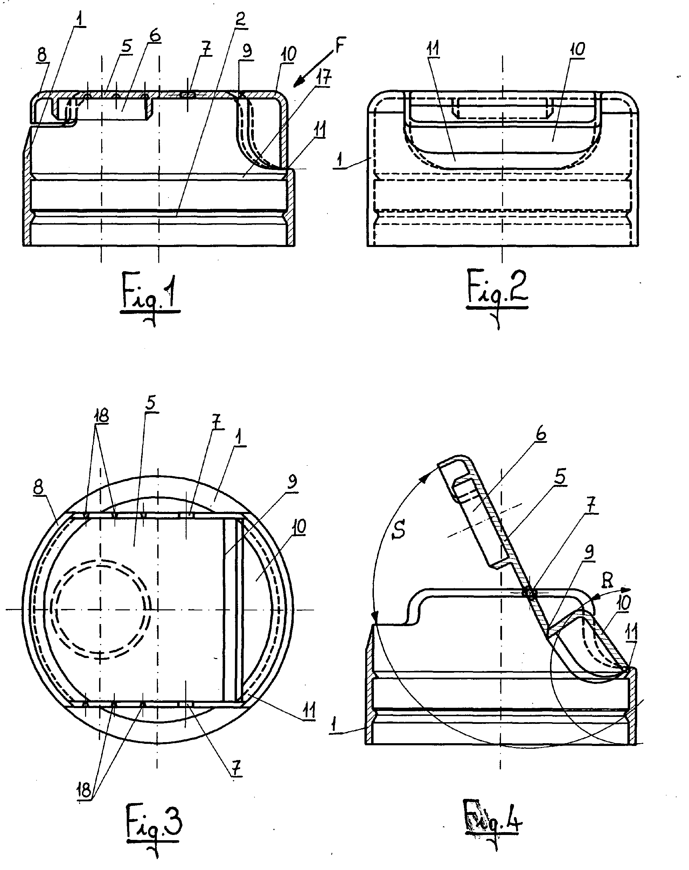

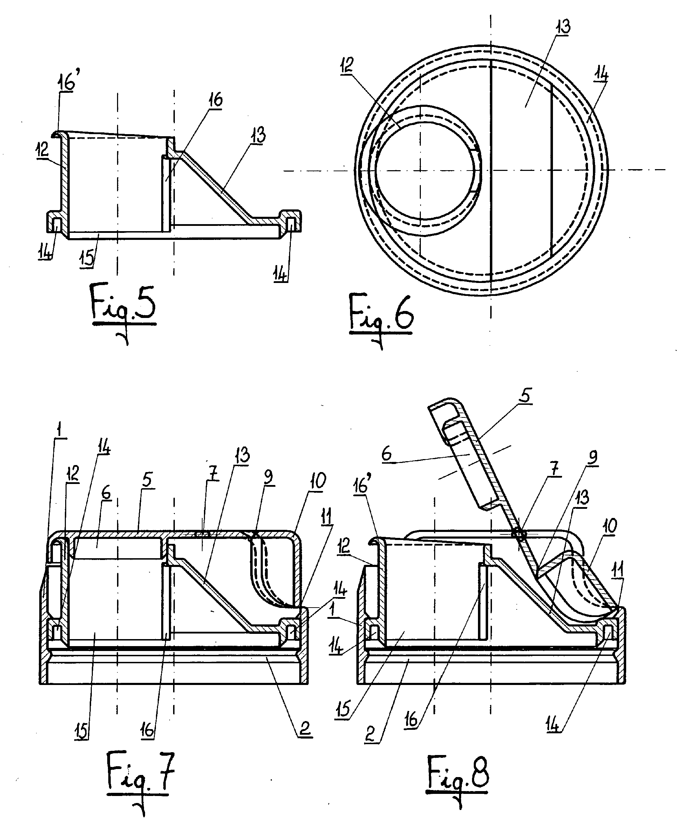

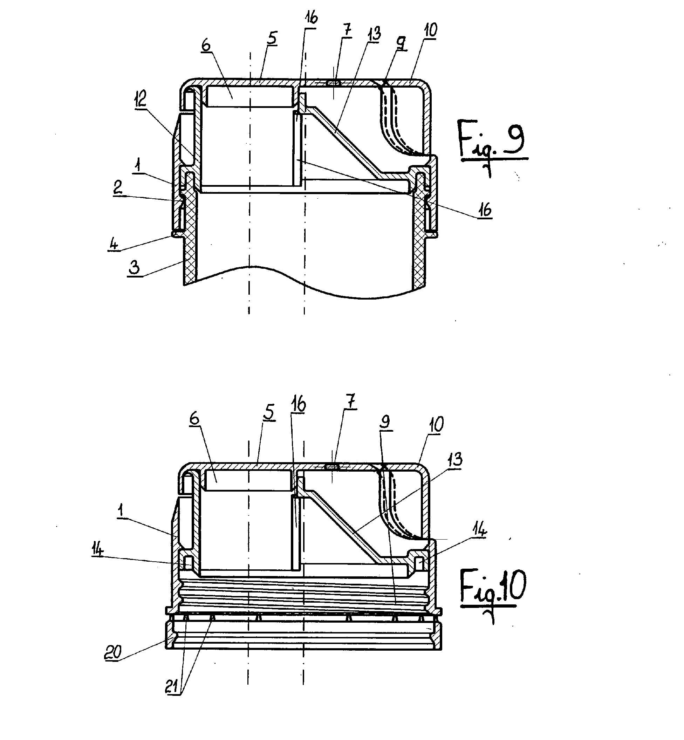

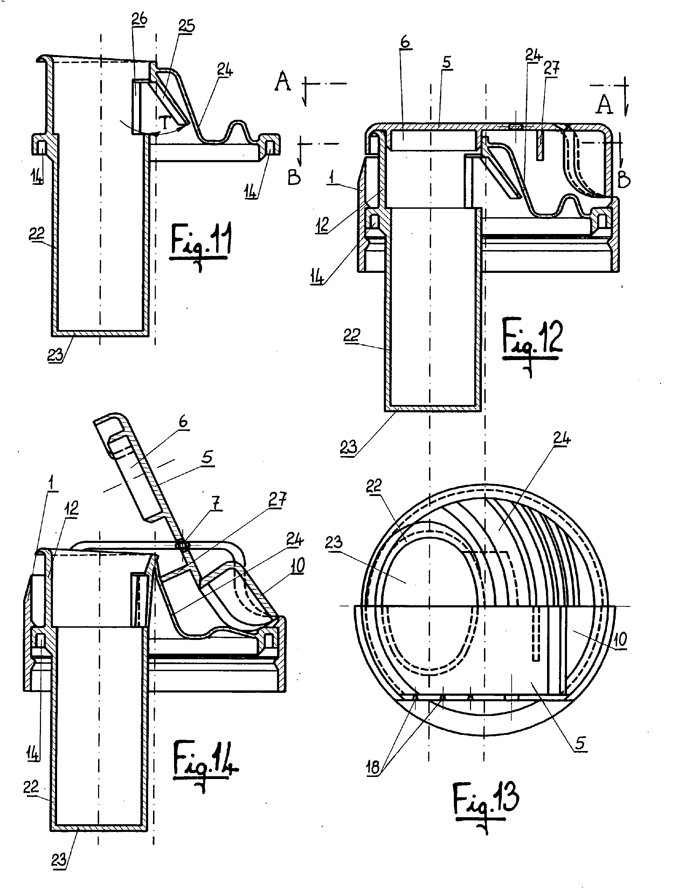

With reference to said Figs. 1 to 9, the cap, subject of this invention, is represented according to a first solution. In Fig. 1 the first element of the cap is shown with body 1 in an almost cylindrical shape to be mounted by pressure on the mouth of the container 3. For example inside the body 1 of the cap a prominent, circular ridge 2 is envisaged, which snap locks into a corresponding groove on the outside of the neck of the container 3; in turn the neck of the container envisages a ring expansion 4 that comes to rest against the lower edge of the body 1 of the cap.

On the upper part of said body 1 of the first element of the cap, there is a lid 5 for closing, fitted with a sealing edge 6 against the pouring spout. This lid 5 is sustained by the lateral pins 7 placed on a transverse horizontal axis, acting as rotation hinges, where these pins are created with the moulding of the aforesaid first element of the cap and where these pins 7 support in torsion the movements of the lid in opening and closing.

On the opposite extremity of the rounded edge 8, the lid shows, connected along a first weakened line 9, an L-shaped section 10, which in turn is connected along a second weakened line 11, to a stretch of the upper edge of the body 1 of the cap.

This first element of the cap shows such functionality that by pushing with a finger or thumb according to the arrow F outside the L-shaped section 10, this lowers itself rotating according to the arrow R along the two weakened lines 9 and 11 and this provokes the raising of the lid 5 according to the arrow S, rotating on the pins 7.

The open lid 5 remains in a stable position and to close it one pushes down toward the body 1 of the cap.

According to this invention, the second element of the cap envisages a pouring spout 12, placed off centre so as to correspond with the sealing edge 6 of the lid 5 of the body 1 of the first element of the cap, where this pouring spout 12 is connected with a skirt 13 that is almost a truncated cone, fitted with a lower C-shaped edge 14, so as to receive tightly the mouth of the container 3.

The bottom 15 and the internal side 16 of the pouring spout 12 are open to allow the flow of liquid leaving the container 3. The pouring spout also has a drip saving device 16' on the outer side.

The second element 12 of the cap is mounted inside the first element 1 and is fixed by means of an internal ridge 17, while the lower C-shaped edge 14 rests on the mouth of the container 3.

The lid 5 has breakable indentations 18 for connection to the body 1, with the function of guarantee.

As already mentioned the cap in question may be snap mounted by pressure as per Fig. 9, but may also be screwed on. When the cap is mounted by means of threading 19, as per Fig. 10, it has a guarantee band 20, joined by means of breakable peduncles 21 to the body 1 of the cap.

The cap as described is of the type with indifferent quantity of liquid to be poured and that is with total pouring or indefinite partial pouring, but according to the invention, this cap may also have the function of measuring device of the liquid to be poured.

This measuring device cap as per Figs. 11 to 13, has the second element with the pouring spout 22 fitted with a closed bottom 23, placed, as in the example of the first solution, off centre compared to the skirt 24, which is always fitted with the sealing profile 14 on the edge of the mouth of the container 3.

This measuring device cap, according to the invention, has in the zone of union of the pouring spout 22 with the skirt 24, a winged profile 25, corresponding to the lateral opening 26 of the pouring spout, while on the lower surface of the lid 5 that is found between the pins 7 and the first weakened line 9, a wall 27 is envisaged with elastic movement according to the arrow T of the winged profile 25 in closure of the lateral opening 26 of the pouring spout 22. With the lid closed this profile 25 is distanced from the lateral opening 26 of the pouring spout 22, so the liquid in the container 3 may easily reach the pouring spout 22 as per Figs. 11 or 12. Instead when the lid is open, the wall 27 pushes the profile 25 which, with deformation of the skirt 24, closes the lateral opening 26 of the pouring spout 22, avoiding communication between the pouring spout and the inside of the container. Therefore within the pouring spout there forms a measured quantity of liquid that may be poured independently of the quantity of liquid existing in the container.

Preferably but not exclusively, the pouring mouth 12 of the first solution with indeterminate pouring is circular as per Figs. 1 to 10, while the pouring spout 22 of the measuring device cap solution has an elliptical shape or even has another convenient profile.

The invention in question may undergo variations and adaptations on the basis . of the size of the cap and the type of liquid to be poured or dosed and may have the substitution of analogous parts having the same purpose.

## Claims

1. Cap for containers with closing lid rotating on a transverse horizontal axis with snap activation by finger or thumb force, allowing the pouring in a single solution or in subsequent non-measured quantities, **characterised by** the fact that it is formed of two elements and in detail:
- a first element of the cap with body (1) with an almost cylindrical shape to be mounted on the mouth of the container (3), where said body (1) has a closing lid (5) in the upper part fitted with a sealing edge (6) against the pouring spout (12), sustained by lateral pins (7) placed on a transverse horizontal axis, acting as hinges for rotation, which support by torsion the movements of the lid in opening and closing, has an L-shaped section (10) connected to the lid along a first weakened line (9) and linked to a stretch of the upper edge of the body (1) of the cap along a second weakened line (11), so that in pressing said L-shaped section (10) toward the inside of the cap one obtains by movement of the L-shaped section (10) along the weakened lines (9 and 11) the stable opening of the cap, whose closure is obtained by means of manual pressure,
- a second element of the cap made up of a pouring spout (12) placed off centre in such way as to correspond with the sealing edge (6) of the lid (5) of the body (1) of the first element of the cap, where this pouring spout (12) is connected to a skirt (13) that is almost a truncated cone in shape, fitted with a C-shaped sealing lower edge (14) on the mouth of the container (3) and where the bottom (15) and the internal side (16) of the pouring spout (12) are open so as to help the flow of the liquid leaving the container (3),
- the second element (12) of the cap is mounted inside the first element (1) and is fixed by means of an internal ridge (17), while its C-shaped lower edge (14) rests on the mouth of the container (3),
so that manoeuvring the lid (5) through the L-shaped section (10) all or part of the content may be poured, possibly keeping the remaining contents by closing the lid again.

2. Cap according to claim 1, **characterised by** that the body (1) of the cap may be mounted by pressure on the mouth of the container (3) for instance by means of a prominent circular ridge (2) that is snapped into a corresponding groove envisaged on the outside of the neck of the container (3), while in turn the neck of the container (3) envisages a ring expansion (4) of rest against the lower edge of the body (1) of the cap.

3. Cap according to claim 1, **characterised by** that it is mounted by means of threading (19) and in this case has a guarantee band (20) joined by means of breakable peduncles (21) to the body of the cap.

4. Cap according to claim 1, **characterised by** that the lateral pins (7) acting as a hinge of rotation for the lid (5) are created by moulding together with the aforesaid first element of the cap.

5. Cap according to claim 1, **characterised by** that the lid (5) is connected to the body (1) of the cap by means of breakable peduncles (18) with the function of guarantee.

6. Cap for containers with closure lid rotating on a transverse horizontal axis with snap activation by finger or thumb pressure with dosed pouring, **characterised by** what is made up of two elements and in detail:
- a first element of the cap with body (1) of almost cylindrical shape to be mounted on the mouth of the container (3) where said body (1) has a closure lid (5) in the upper part fitted with a sealing mouth (6) against the pouring spout (22) where said lid (5) is sustained by lateral pins (7) placed on a transverse horizontal axis, acting as hinges of rotation, which support by torsion the movements in opening and closing of the lid, has an L-shaped section (10) connected to the lid along a first weakened line (9) and connected to a stretch of the upper edge of the body (1) of the cap along a second weakened line (11),
- a second element of the cap made up of a pouring spout (22) fitted with a closed bottom (23) and placed off centre compared to the skirt (24) which in turn is fitted with a sealing profile (14) on the edge of the mouth of the container (3), where this pouring spout (22) has a lateral opening (26), and has a winged profile (25) corresponding to the lateral opening (26), placed on the zone of joining of the pouring spout (22) with the skirt (24), in such way that this winged profile (25) can close or open said lateral opening (26),
- on the inside of the lid, between the pins (7) and the first weakened line (9) a wall (27) of elastic movement is envisaged of the winged profile (25) in closure against the lateral opening (26) of the pouring spout (22),
so that with the lateral opening (26) open and that is with the winged profile (25) in position of rest distanced, the pouring spout (22) may be filled, while when the lid is opened (5), the wall (27) pushes the winged profile (25), with consequent elastic deformation of the skirt (24) and closure of said lateral opening (26), so that only the quota of the dosed liquid inside the pouring spout may be poured out.
